# NEUE EUROPÄISCHE PATENTSCHRIFT

(11) **EP 1 427 601 B2**
(45) Veröffentlichungstag und Bekanntmachung des Hinweises auf die Entscheidung über den Einspruch: **25.03.2009**
(45) Hinweis auf die Patenterteilung: 23.03.2005
(21) Anmeldenummer: 02769944.6
(22) Anmeldetag: 09.09.2002
(51) Int. Cl.: B60N 2/16, B60N 2/22

(54) **KRAFTFAHRZEUGSITZ**
MOTOR VEHICLE SEAT
SIEGE DE VEHICULE AUTOMOBILE

(30) Priorität: 10.09.2001 DE 10145843
(43) Veröffentlichungstag der Anmeldung: 16.06.2004
(73) Patentinhaber: Brose Fahrzeugteile GmbH & Co. KG, Coburg, 96450 Coburg (DE)
(72) Erfinder: SCHECK, Georg, 96479 Weitramsdorf (DE); SCHNEYER, Gerhard, 96450 Coburg (DE); JANSSON, Dick, Michigan 48346 (US)
(74) Vertreter: Müller, Wolfram Hubertus
(86) Internationale Anmeldenummer: PCT/DE2002/003410
(87) Internationale Veröffentlichungsnummer: WO 2003/024739

(56) Entgegenhaltungen:
- EP-A- 0 006 610
- DE- - 19 716 596
- DE-A- 2 624 303
- DE-A- 19 845 772
- DE-C- 19 808 235
- GB-A- 505 703
- US- - 5 697 674
- US-A- 2 091 088
- US-A- 2 161 367
- US-A- 4 779 832
- US-A- 6 030 042

## Beschreibung

Die Erfindung betrifft einen Kraftfahrzeugsitz nach dem Oberbegriff des Patentanspruchs 1.

Ein derartiger Kraftfahrzeugsitz umfaßt mindestens eine Einstellvorrichtung, mit der ein Sitzteil entgegen seiner Gewichtskraft und/oder entgegen der Gewichtskraft eines auf dem entsprechenden Sitz befindlichen Fahrzeuginsassen in seiner Lage verstellbar ist, sowie mindestens ein Federelement, das, z.B. zur Reduzierung des Spiels, unter Vorspannung auf eine die Verstellkraft übertragende kinematische Kette der mindestens einen Einstellvorrichtung einwirkt.

Bei der Einstellvorrichtung kann es sich beispielsweise um eine Vorrichtung zur Einstellung der Sitzhöhe oder um eine Vorrichtung zur Einstellung der Lehnenneigung eines Kraftfahrzeugsitzes handeln. Die kinematische Kette dient zur Übertragung der Verstellkraft von einem Antrieb der jeweiligen Einstellvorrichtung zu dem zu verstellenden Sitzteil (z.B. einem höhenverstellbaren Sitzgestell oder einer neigungsverstellbaren Rückenlehne) und kann beispielsweise als Hebelanordnung ausgebildet sein.

Aus der gattungsbildenden DE 198 45 772 A1 ist ein Kraftfahrzeugsitz mit mindestens zwei Verstelleinrichtungen zum Verstellen des Sitzes und/oder von Teilen des Sitzes bekannt, wobei die Verstelleinrichtung Mittel zum Ausgleich eines etwaigen Spiels in der Verstelleinrichtung aufweist. Die Mittel zum Ausgleich des Spiels umfassen ein vorgespanntes elastisches Element, welches derart angeordnet ist, daß die von dem elastischen Element erzeugte Kraft auf die Getriebe mindestens zweier Verstelleinrichtungen einwirkt und dabei vorzugsweise eine Kraftkomponente parallel zur Richtung jeder Verstellbewegung aufweist, die von den einzelnen Verstelleinrichtungen hervorgerufen wird. Hierdurch kann mit nur einem elastischen Element ein etwaiges Spiel in zwei oder mehr Verstelleinrichtungen ausgeglichen werden.

Aus der US 5,697,674 ist ein Kraftfahrzeugsitz der eingangs genannten Art bekannt, bei dem das Federelement derart angeordnet ist, dass es einerseits zur Reduzierung des Spiels in der Einstellvorrichtung dient und andererseits bei einer Verstellung des Sitzteiles entgegen der Gewichtskraft entspannt, so dass Federenergie in die kinematische Kette eingespeist wird, und dass bei einer Verstellung des Sitzteiles in Richtung der Gewichtskraft das Federelement gespannt wird. Ein solcher Kraftfahrzeugsitz ist auch aus der DE 197 16 596 A1 bekannt.

Der Erfindung liegt die Aufgabe zugrunde, einen Kraftfahrzeugsitz der oben genannten Art weiter zu verbessern.

Dieses Problem wird erfindungsgemäß durch die kennzeichnenden Merkmale des Anspruchs 1 gelöst, wonach ein dem zu verstellenden Sitzteil zugeordneter Kraftangriffspunkt des Federelementes an einem zusätzlichen Getriebeelement vorgesehen ist, das außerhalb der kinematischen Kette der Sitzverstellung angeordnet ist und das auf ein Element der kinematischen Kette einwirkt.

Diese Anordnung des Federelementes hat den Vorteil, dass das Federelement eine Verstellbewegung entgegen der Gewichtskraft unterstützt, während es einer Verstellbewegung des Sitzteiles mit der Gewichtskraft entgegenwirkt. Hierdurch bewirkt das Federelement eine Vergleichmäßigung der Verstellkräfte, die zum Verstellen eines Sitzteiles entgegen der Gewichtskraft einerseits und mit der Gewichtskraft andererseits erforderlich sind. Insbesondere wird vermieden, daß für eine Verstellung entgegen der Wirkung der Gewichtskraft sehr viel größere Verstellkräfte erforderlich sind als für eine Verstellung in Richtung der Gewichtskraft.

"Außerhalb der kinematischen Kette angeordnet" bedeutet dabei, dass das zusätzliche Getriebeelement lediglich aufgrund der Wirkung des Federelementes mit der kinematischen Kette zusammenwirkt, und dass die kinematische Kette auch ohne das zusätzliche Getriebeelement voll funktionsfähig Verstellkräfte übertragen könnte.

In einer bevorzugten Ausführungsform übt das Federelement an einem Kraftangriffspunkt, der dem zu verstellenden Sitzteil zugeordnet ist, also entweder am Sitzteil selbst oder an einem bei Betätigung der Einstellvorrichtung gemeinsam mit dem Sitzteil bewegbaren Bauteil vorgesehen ist, eine Kraft mit einer Komponente in Richtung der Gewichtskraft aus. Dabei ist der dem zu verstellenden Sitzteil zugeordnete Kraftangriffspunkt des Federelementes so angeordnet, daß er bei einer Verstellung des Sitzteiles entgegen der Gewichtskraft derart verschoben wird, daß sich das Federelement entspannt.

Dieses auf den ersten Blick widersprüchliche Verhalten des Federelementes kann bei einem Federelement, das zur Reduzierung des Spiels einer Einstellvorrichtung für die Höhe eines Sitzteiles dient, die bei einer Verstellung der Höhe zugleich eine hiermit überlagerte Längsbewegung des Sitzteiles in Sitzlängsrichtung bewirkt (wie es bei den auf einer Parallelogrammkinematik beruhenden Einstellvorrichtungen für die Sitzhöhe üblich ist) dadurch erreicht werden, dass das Federelement derart zwischen seinen beiden Kraftangriffspunkten verspannt ist, daß es sich bei einem Anheben des Sitzteiles aufgrund der hiermit überlagerten Längsbewegung des Sitzteiles in Sitzlängsrichtung entspannt. Hierzu wird das Federelement zwischen seinen beiden Kraftangriffspunkten schräg zur Richtung der Gewichtskraft verspannt.

Bei einem Federelement, das zur Reduzierung des Spiels einer Einstellvorrichtung für die Neigung eines Sitzteiles dient, das um eine Achse schwenkbar gelagert ist, wobei das verstellbare Sitzteil bezüglich der Schwenkachse einen ersten Hebelarm bildet, wie es bei einer Einstellvorrichtung für die Lehnenneigung üblich ist, wird der dem Sitzteil zugeordnete Kraftangriffspunkt des Federelementes außerhalb des ersten Hebelarmes an einem zweiten Hebelarm angeordnet, der z.B. durch einen Fortsatz des Sitzteiles gebildet wird.

Das Federelement kann gemäß einer Ausführungsform als Zugfeder ausgebildet sein, deren Kraftangriffspunkte sich bei einer Verstellung des entsprechenden Sitzteiles entgegen der Gewichtskraft einander annähern und bei einer Verstellung in Richtung der Gewichtskraft voneinander entfernen.

Andererseits kann das Federelement als Druckfeder ausgebildet sein, die derart angeordnet ist, daß ihre Kraftan-griffspunkte sich bei einer Verstellung des entsprechenden Süzteiles entgegen der Gewichtskraft voneinander entfernen und sich bei einer Verstellung in Richtung der Gewichtskraft einander annähern.

Die Federelemente können dabei in Anpassung an die Gegebenheiten der jeweiligen Einstellvorrichtung von unterschiedlichem Federtyp sein; es kann sich beispielsweise um eine lineare Feder, eine Drehfeder oder eine Spiralfeder handeln.

Gemäß einer bevorzugten Ausführungsform der Erfindung liegen sämtliche Glieder der kinematischen Kette der Einstellvorrichtung zwischen den Kraftangriffspunkten des Federelementes, so daß das Federelement eine Reduzierung des Spiels in der gesamten Einstellvorrichtung bewirkt.

Entsprechend der technischen Lehre der DE 198 45 772 A1 kann darüber hinaus vorgesehen sein, daß ein Federelement zum Ausgleich des Spiels mehrerer Einstellvorrichtungen dient.

Ein Kraftangriffspunkt des Federelementes liegt vorzugsweise außerhalb der kinematischen Kette der Einstellvorrichtung, insbesondere an einem Teil, das bei Betätigung der Einstellvorrichtung seine Lage bezüglich der Fahrzeugkarosserie nicht verändert, wie z.B. einem Teil der Bodenbaugruppe des Sitzes, insbesondere der Oberschiene einer Schienenlängsführung.

Der andere Kraftangriffspunkt der Feder ist an einem Teil vorgesehen, das bei Betätigung der Einstellvorrichtung seine Lage (gemeinsam mit dem zu verstellenden Sitzteil) verändert, z.B. an einem Teil der kinematischen Kette der Einstellvorrichtung. Das entsprechende Teil kann dabei durchaus bei einer Betätigung der Einstellvorrichtung relativ zu dem Sitzteil bewegbar sein. Entscheidend ist allein, daß das entsprechende Teil bei einer Bewegung des zu verstellenden Sitzteiles automatisch mitbewegt wird.

Der bewegbare Kraftangriffspunkt kann beispielsweise an einem schwenkbaren Hebelarm oder einem Getriebeelement der kinematischen Kette angeordnet sein.

Gemäß einer weiteren Ausführungsform der Erfindung kann vorgesehen sein, daß ein Kraftangriffspunkt des Federelementes am zu verstellenden Sitzteil und der andere Kraftangriffspunkt des Federelementes an einem Glied der kinematischen Kette vorgesehen ist.

Das zusätzliche Getriebeelement wirkt unter der Vorspannkraft des Federelementes auf das genannte Element der kinematischen Kette vorzugsweise derart ein, daß eine Bewegung des Elementes der kinematischen Kette, die zu einer Verstellung des Sitzteiles entgegen der Gewichtskraft führt, unterstützt wird. Es wird dann also Federenergie in die kinematische Kette eingespeist. Umgekehrt wirkt in diesem Fall das zusätzliche Getriebeelement aufgrund der Vorspannkraft des Federelementes einer Verstellung des entsprechenden Sitzteiles in Richtung der Gewichtskraft entgegen.

Bei dieser Anordnung kann das Federelement zusammen mit dem zusätzlichen Getriebeelement zur Herausnahme des Spiels aus den Getriebeelementen der Einstellvorrichtungen dienen, indem das zusätzliche Getriebeelement derart auf ein Getriebeelement der kinematischen Kette einwirkt, daß dieses unter Herausnahme von Spiel gegen ein anderes Getriebeelement der kinematischen Kette gedrückt wird.

Gemäß einer konkreten Ausführungsform greift ein vom Antrieb der Einstellvorrichtung angetriebenes Zahnrad in eine Gegenverzahnung eines in der kinematischen Kette angeordneten Getriebeelementes ein, wobei als zusätzliches Getriebeelement ein Verzahnungselement vorgesehen ist, dessen Verzahnung mit dem in der kinematischen Kette angeordneten Getriebeelement übereinstimmt. Dabei können das in der kinematischen Kette angeordnete Getriebeelement und das zusätzliche Getriebeelement z.B. als schwenkbar gelagerte Zahnsegmente ausgebildet sein und das zusätzliche Getriebeelement auf der Achse des in der kinematischen Kette angeordneten Getriebeelementes frei schwenkbar lagern. Der Kraftangriffspunkt des Federelementes am zusätzlichen Getriebeelement ist von dieser Achse beabstandet.

Die Verwendung eines zusätzlichen Getriebeelementes zur Herausnahme des Spiels aus einem Getriebe ist auch unabhängig vom Gegenstand der vorliegenden Patentanmeldung für beliebige Getriebe, insbesondere Zahnradgetriebe, möglich.

Weitere Merkmale und Vorteile der Erfindung werden bei der nachfolgenden Beschreibung von Ausführungsbeispielen anhand der Figuren deutlich werden.

Es zeigen:
- Fig. 1 -: eine schematische Darstellung eines höhenverstellbaren Kraftfahrzeugsitzes mit einem Federelement zur Reduzierung des Spiels in der Einstellvorrichtung für die Sitzhöhe, das mit einem Ende an dem höhenverstellbaren Sitzteil angreift;
- Fig. 2 -: eine Abwandlung des Kraftfahrzeugsitzes aus Figur 1, wobei das Federelement mit einem Ende an einem Verstellhebel der Einstellvorrichtung für die Sitzhöhe angreift;
- Fig. 3 -: ein erstes Ausführungsbeispiel der Erfindung, bei dem in Abwandlung zur Figur 1 das Federelement mit einem Ende an einem zusätzlichen Getriebeelement angreift, das nicht der Übertragung von Verstellkräften auf das zu verstellende Sitzteil dient;
- Fig. 4 -: eine vergrößerte Darstellung eines Details der Anordnung aus Figur 3;
- Fig. 5 -: eine Abwandlung des Ausführungsbeispiels aus Figur 4;
- Fig. 6 -: eine schematische Darstellung einer neigungsverstellbaren Sitzlehne mit einem Federelement zur Reduzierung des Spiels in der Einstellvorrichtung für die Lehnenneigung;
- Fig. 7 -: eine Abwandlung des Ausführungsbeispiels aus Figur 6, wobei das Federelement an einem zusätzlichen Getriebeelement angreift, das nicht der Übertragung von Verstellkräften auf die Rückenlehne dient.

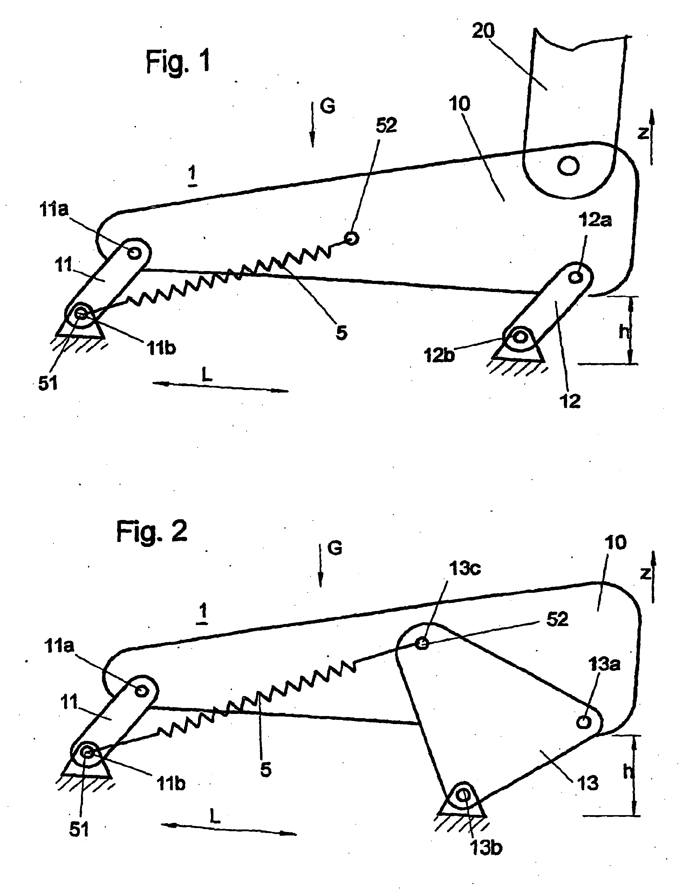

In Figur 1 ist in einer Seitenansicht schematisch ein Sitzgestell 1 dargestellt, das einen höhenverstellbaren Sitzträger 10 sowie eine hieran schwenkbar angelenkte Rückenlehne 20 umfaßt.

Zur Einstellung der Höhen des Sitzträgers 10 dient eine bekannte Parallelogrammkinematik, bei der am Sitzträger 10 beidseits jeweils ein vorderer und ein hinterer Verstellhebel 11, 12 um eine Achse 11a, 12a verschwenkbar angelenkt ist. Die Verstellhebel 11, 12 sind mit ihrem anderen Ende jeweils um eine Achse 11b bzw. 12b verschwenkbar an einer fährzeugbodenseitigen Baugruppe, z.B. der Oberschiene einer Schienenlängsführung, gelagert. Bei einer derartigen Einstellvorrichtung für die Sitzhöhe h führt eine Änderung der Sitzhöhe, die durch ein Verschwenken der Versteilhebel 11, 12 ausgelöst wird, zugleich auch zu einer Verlagerung des Sitzträgers 10 in Sitzlängsrichtung L (entsprechend der Fahrzeuglängsachse in einem Kraftfahrzeug). Genauer gesagt, führt eine Vergrößerung der Sitzhöhe h zu einer Vorverlagerung des Sitzträgers 10 und eine Verminderung der Sitzhöhe h zu einer Rückverlagerung des Sitzträgers 10 (bezogen auf die Vorwärtsfahrtrichtung des Fahrzeugs).

Zur Reduktion des Spiels in der Einstellvorrichtung für die Höhe des Sitzträgers 10 und somit des Sitzes insgesamt, ist ein Federelement 5 in Form einer linearen Zugfeder vorgesehen, das mit einem Ende, also einem ersten Kraftan-griffspunkt 51, an einer bodenseitigen Baugruppe des Kraftfahrzeugs, z.B. an der Oberschiene einer Schienenlängsführung, und mit seinem anderen, oberen Ende, also einem zweiten Kraftangriffspunkt 52, am Sitzträger 10 befestigt ist. Die Befestigung des unteren Kraftangriffspunktes 51 des Federelementes 5 fällt dabei mit der unteren Lagerstelle des vorderen Verstellhebels 11 zusammen. Die beiden Kraftangriffspunkte 51, 52 sind derart angeordnet, daß das Federelement 5 zwischen den beiden Kraftangriffspunkten 51, 52 (bezogen auf die Fahrtrichtung eines Kraftfahrzeugs) schräg von vorne unten nach hinten oben verläuft.

Das Federelement 5 übt auf den Sitzträger 10 demnach eine Kraft nach vorne unten aus, so daß die Federkraft insbesondere eine Komponente in Richtung der Gewichtskraft G aufweist, die auf den Sitzträger 10 bzw. auf eine auf dem Sitz 1 befindliche Person wirkt. Der Sitzträger 10 wird also durch das Federelement 5 in Richtung auf den Fahrzeugboden, und somit in Richtung der Gewichtskraft G, vorgespannt.

Aufgrund der schrägen, diagonalen Anordnung des Federelementes 5 führt eine Vergrößerung der Sitzhöhe h durch Verschwenken der Verstellhebel 11, 12 dazu, daß sich die beiden Kraftangriffspunkte 51, 52 des Federelementes 5 einander annähern. Denn eine Vergrößerung der Sitzhöhe h ist - wie bereits beschrieben - von einer Vorverlagerung des Sitzträgers 10 begleitet, bei der sich der obere, am Sitzträger 10 vorgesehene Kraftangriffspunkt 52 des Federelementes 5 in Sitzlängsrichtung L dem unteren, ortsfest angeordneten Kraftangriffspunkt 51 nähert. Bei geeigneter Anordnung des Federelementes 5, insbesondere von dessen Kraftangriffspunkten 51, 52, führt dies trotz der Zunahme des Abstandes der beiden Kraftangriffspunkte 51, 52 entlang der vertikalen Fahrzeugachse z im Saldo zu einer Verringerung des Abstandes zwischen den beiden Kraftangriffspunkten 51, 52.

Dies bedeutet, daß das Federelement 5 in Form einer Zugfeder bei einer Vergrößerung der Sitzhöhe h mittels der zugeordneten Einstellvorrichtung, die ja entgegen der Gewichtskraft G erfolgt, entspannt und damit Federenergie (potentielle Energie) abgibt, wodurch die Vergrößerung der Sitzhöhe erleichtert wird bzw. die von der Einstellvorrichtung zur Vergrößerung der Sitzhöhe aufzubringende Kraft vermindert wird. Das Federelement 5 unterstützt also das Anheben des Sitzträgers 10 entgegen der Gewichtskraft G, obwohl es andererseits den Sitzträger 10 in Richtung der Gewichtskraft G nach unten vorspannt.

In Figur 2 ist eine Abwandlung des Kraftfahrzeugsitzes aus Figur 1 dargestellt, wobei der Unterschied darin besteht, daß der obere Kraftangriffspunkt 52 des Federelementes 5 nicht unmittelbar am Sitzträger 10 sondern vielmehr an einem Fortsatz des hinteren Verstellhebels 13 angreift, der mit seinem oberen. Ende um eine Achse 13a verschwenkbar am Sitzträger 10 und mit seinem unteren Ende um eine Achse 13b verschwenkbar an einer bodenseitigen Baugruppe des Fahrzeugs angelenkt ist. Der obere Kraftangriffspunkt 52 des Federelementes 5 fällt dabei mit einer Stelle 13c des hinteren Verstellhebels 13 zusammen, die bei einer Vergrößerung der Sitzhöhe h relative zu dem Sitzträger 10 eine Bewegung mit einer Komponente nach unten in Richtung auf den Fahrzeugboden (also entgegen der nach oben weisenden vertikalen Fahrzeugachse z) ausführt. Dies führt zu einer zusätzlichen Verminderung des Abstandes zwischen den beiden Kraftangriffspunkten 51, 52 des Federelementes 5 und somit zu einer zusätzlichen Entspannung des Federelementes 5. Die Befestigung des Federelementes mit seinen dem sitzträ-10 zugeordneten Kraftangriffspunkt 52 an einem Bauteil (Verstellhebel 13), das einerseits bei einer Verstellung des Sitzseitenteils 10 gemeinsam mit diesem bewegt wird und sich andererseits hierbei zusätzlich in Richtung auf den anderen Kraftangriffspunkt 51 des Federelementes 5 bewegt, ist insbesondere vorteilhaft bei Fahrzeugsitzen, die bei einer Verstellung der Sitzhöhe nur eine geringe Verlagerung in Sitzlängsrichtung L ausführen.

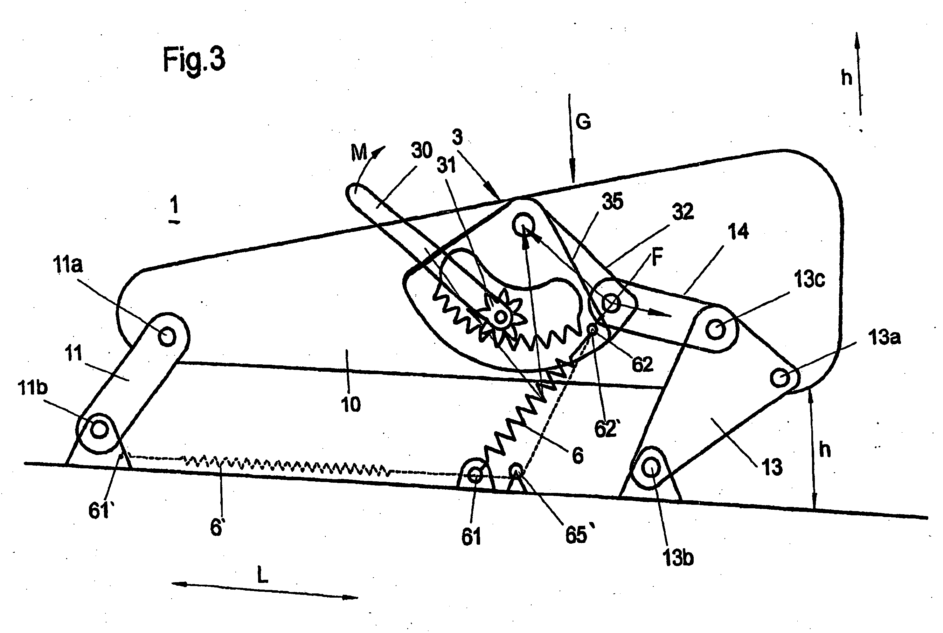

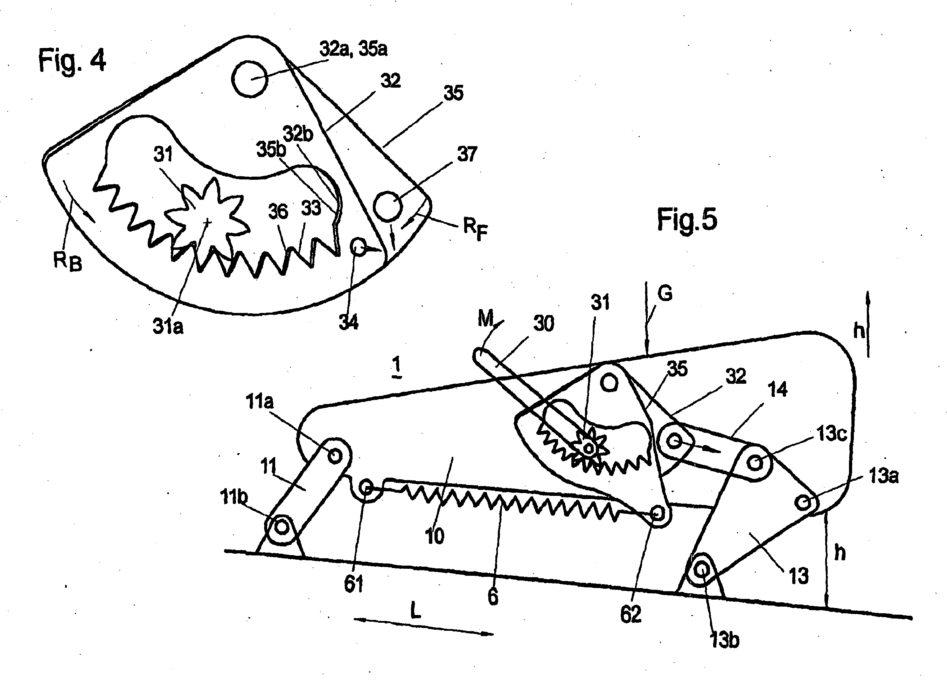

Bei dem in den Figuren 3 und 4 dargestellten Ausführungsbeispiel ist von der Einstellvorrichtung für die Sitzhöhe neben den beiden Verstellhebeln 11, 13, die entsprechend dem Ausführungsbeispiel gemäß Figur 2 gestaltet sind, auch eine Antriebsvorrichtung 3 dargestellt. Diese ist dem hinteren Verstellhebel 13 zugeordnet, so daß der vordere Verstellhebel 11 lediglich als passiver Ausgleichshebel dient.

Die Antriebsvorrichtung 3 umfaßt als Antrieb einen Betätigungshebel 30 (manueller Antrieb), mit dem ein um eine Achse 31a drehbares Ritzel 31 betätigbar ist, dessen Verzahnung in einer Längsverzahnung 33 eines um eine Achse 32a schwenkbar gelagertes Zahnsegmenthebels 32 kämmt, wobei die Längsverzahnung 33 in einer längserstreckten Ausnehmung 32b des Zahnsegmenthebels 32 gebildet ist. An einer Lagerstelle 34 des Zahnsegmenthebels 32, ist ein Koppelhebet 14 angelenkt, der eine von dem Betätigungshebel 30 über das Ritzel 31 in den Zahnsegmenthebel 32 eingeleitete Bewegung auf den hinteren Verstellhebel 13 überträgt. Hierdurch kann je nach Betätigungsrichtung des Betätigungshebels 30 der Sitzträger 10 wahlweise angehoben oder abgesenkt werden. Derartige manuelle Verstelleinrichtungen für die Sitzhöhe sind bekannt, so daß hierauf nicht näher eingegangen wird.

Vorliegend ist auf der Schwenkachse 32a des Zahnsegmenthebels 32 ein zusätzlicher Zahnsegmenthebel 35 mit seiner Schwenkachse 35a gelagert, der in einer längserstreckten Ausnehmung 35b eine Längsverzahnung 36 aufweist, die in ihrer Geometrie und Ausbildung mit der Längsverzahnung 33 des erstgenannten Zahnsegmenthebels 32 übereinstimmt.

Dieser zusätzliche Zahnsegmenthebel 35 bildet im Gegensatz zu dem erstgenannten Zahnsegmenthebel 32 kein Glied der kinematischen Kette, die eine mittels des Betätigungshebels 30 ausgeübte Verstellkraft über die Getriebeelemente 31, 32, den Koppelhebel 14 sowie den hinteren Verstellhebel 13 auf das Sitzseitenteil 10 überträgt.

Der zusätzliche Zahnsegmenthebel 35 weist eine Lagerstelle 37 zur Befestigung des oberen Endes eines Federelementes 6 (lineare Zugfeder) mit seinem oberen Kraftangriffs-punkt 62 auf. Der andere, untere Kraftangriffspunkt 61 des Federelementes 6 ist demgegenüber an einer bodenseitigen Baugruppe des Fahrzeugs, z.B. der Oberschiene einer Sitzlängsführung, festgelegt. Das Federelement 6 ist im Bereich des hinteren Verstellhebels 13 der Einstellvorrichtung für die Sitzhöhe angeordnet und dient der Herausnahme des Spiels aus dieser Einstellvorrichtung.

Anhand der Figuren 3 und 4 ist erkennbar, daß der zusätzliche Zahnsegmenthebel 35 mit seiner Verzahnung 36 unter der Wirkung des Federelementes 6 derart gegen die Verzahnung des Ritzels 31 verspannt wird, daß mindestens ein in Eingriff mit der Verzahnung 33 des in der kinematischen Kette angeordneten Zahnsegmenthebels 32 befindliches Zahnelement des Ritzels 31 gegen eine Zahnflanke dieser Verzahnung 33 gedrückt wird. Hierdurch wird aus dem Getriebe 31, 32 der Antriebsvorrichtung 3 und damit der Einstellvorrichtung für die Sitzhöhe Spiel herausgenommen. Die Feder 6 dient hier also der Herausnahme des Spiels aus dem Getriebe der Antriebsvorrichtung 3.

Zur Verdeutlichung der Funktion dieser Anordnung ist in Figur 4 anhand eines ersten Pfeiles R_{F} angedeutet, wie der zusätzliche Zahnsegmenthebel 35 unter der Wirkung des Federelementes 36 in entgegengesetzter Richtung um die Achse 35a belastet wird wie der erste Zahnsegmenthebel 32 unter der Wirkung der Gewichtskraft G um seine identische Schwenkachse 32a, vgl. den entsprechenden Pfeil R_{B}.

Das über den zusätzlichen Zahnsegmenthebel 35 mittels des Federelementes 6 eingeleitete Moment wird bei ruhendem Sitz über eine Bremsvorrichtung (die in bekannter Weise zwischen den Getriebeelementen 31, 32 und dem Antriebshebel 30 angeordnet ist) in den Sitzträger 10 eingeleitet. Wenn antriebsseitig ein Moment auf den Betätigungshebel 30 aufgebracht wird, das zu einer Vergrößerung der Sitzhöhe h führt, vgl. den Pfeil M in Figur 3, dann unterstützt das von dem Federelement 6 über den zusätzlichen Zahnsegmenthebel 35 auf das Ritzel 31 ausgeübte Moment die entsprechende Verstellbewegung des Ritzels 31 und damit indirekt auch der nachgeordneten Elemente 32, 14, 13.

Im übrigen dient auch hier das Federelement 6 dazu, den Träger 10 in Richtung auf den Fahrzeugboden zu verspannen, um Spiel aus der gesamten Einstellvorrichtung für die Sitzhöhe herauszunehmen, wobei außerdem bei einer Vergrößerung der Sitzhöhe h die beiden Kraftangriffspunkte 61, 62 des Federelementes 6 aufeinander zu bewegt werden, so daß dieses sich entspannt und die entsprechende Verstellbewegung unterstützt. Dies wird auch hier durch eine diagonale, schräge Anordnung des Federelementes 6 erreicht, das mit seinem oberen Kraftangriffspunkt 62 an einem mit dem Sitzträger 10 verbundenen Bauteil (zusätzlicher Zahnsegmenthebel 35) festgelegt ist, das sich bei einer Vergrößerung der Sitzhöhe h im Bereich des Lagerpunktes 37 für das obere Ende der Feder 6 nach unten bewegt, so daß die Annäherung der beiden Kraftangriffspunkte 61, 62 bei einer Vergrößerung der Sitzhöhe h noch unterstützt wird.

In Figur 3 ist außerdem eine alternative Anordnung eines Federelementes 6' dargestellt, das mit einem unteren Kraftangriffspunkt 61' an einer bodenseitigen Baugruppe des Fahrzeugs und mit seinem oberen Kraftangriffspunkt 62' an der vorstehend beschriebenen Lagerstelle 37 des zusätzlichen Zahnsegmenthebels 35 befestigt ist. Das Federele-ment 6' ist hierbei entlang der Fahrzeuglängsrichtung L verlaufend angeordnet und lediglich im Bereich seines hinteren Federendes mittels eines Umlenkelementes 65' derart umgelenkt, daß dieses Federende zu dem oberen Kraftangriffspunkt 62' geführt ist. Der obere Kaftangriffs-punkt 62' und das Umlenkelement 65' sind derart angeordnet, daß sich eine gerade Verbindungslinie (Verbindungsstrecke) zwischen den beiden Punkten 62', 65' schräg zur Fahrzeuglängsrichtung L von vorne unten nach hinten oben erstreckt.

Um eine besonders nachhaltige Verspannung des Sitzträ-gers 10 zum Zweck der Reduktion des Spiels sowie zur Unterstützung einer Verstellbewegung entgegen der Gewichts-kraft G zu erzielen, können Federelemente 5, 6, die im Bereich des vorderen Verstellhebels bzw. des hinteren Verstellhebels der Einstellvorrichtung für die Sitzhöhe angeordnet sind, auch gleichzeitig zum Einsatz kommen.

Figur 5 zeigt eine Abwandlung des Ausführungsbeispiels aus den Figuren 3 und 4, wobei der Unterschied darin besteht, daß das Federelement 6 mit seinem einen Kraftangriffspunkt 61 am Sitzträger 10 und mit seinem anderen Kraftangriffspunkt 62 am zusätzlichen Zahnsegmenthebel 35 festgelegt ist. Bei einer derartigen Anordnung dient das Federeiement 6 lediglich zur Herausnahme des Spiels aus den Getriebeelementen der Einstellvorrichtung für die Sitzhöhe, es kann aber nicht das Spiel aus der Einstellvorrichtung insgesamt herausgenommen werden. Ein Vorteil dieser Anordnung besteht darin, daß es keine kraftmäßige Rückwirkung auf den Sitz insgesamt gibt, wodurch die Montage des Sitzes erleichtert wird (keine Verspannung des Sitzes).

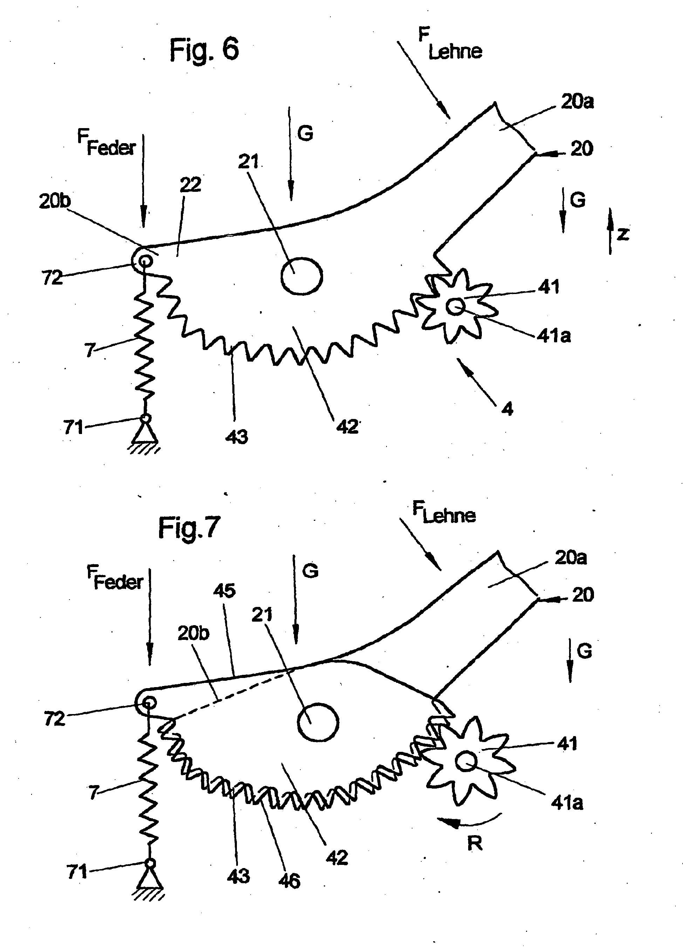

In Figur 6 ist schematisch ein Teil des Lehnengestells 20 des Sitzgestells 1 (vergl. Figur 1) dargestellt, das um eine Achse 21 verschwenkbar angeordnet ist, wobei das Gestell der Rückenlehne (Lehnengestell 20) bezüglich der Schwenkachse 21 einen ersten Hebelarm 20a bildet, der den Rücken eines Fahrzeuginsassen abstützt, sowie einen zweiten Hebelarm 20b.

Im Bereich der Schwenkachse 21 ist am Lehnengestell 20 ein Zahnsegment 42 mit einer Verzahnung 43 vorgesehen, die mit der Verzahnung eines um eine Achse 41 a drehbaren Ritzels 41 kämmt. Das Ritzel 41 ist durch einen zugeordneten manuellen oder fremdkraftbetätigten (insbesondere elektrischen) Antrieb drehbar und löst je nach Drehrichtung ein Verschwenken des ersten Hebelarmes 20a nach vorne oder nach hinten aus.

In dem Verstellbereich des Lehnengestells 20, in dem sich dieses in einer Gebrauchsposition befindet, in der es den Rücken eines auf dem Sitz befindlichen Fahrzeuginsassen abstützen kann, befindet sich die Rückenlehne entweder in einer senkrechten Stellung (parallel zur vertikalen Fahrzeugachse z) oder sie ist nach hinten geneigt, so daß in diesen Fällen die Gewichtskraft G, die auf das Lehnengestell 20 wirkt, die Tendenz hat, die Neigung des ersten Hebelarmes 20a nach hinten zu verstärken. Zusätzlich können noch Kräfte F_{Lehne} eines auf dem entsprechenden Sitz befindlichen und sich an der Rückenlehne abstützenden Insassen in der gleichen Richtung wirken.

Dies bedeutet, daß eine Verstellung der Neigung der Rückenlehne, mit der diese aus einer nach hinten geneigten Gebrauchsposition in Richtung auf die vertikale Position verstellt wird, entgegen der Gewichtskraft G erfolgt. Um eine solche Verstellung der Rückenlehne zu unterstützen, ist ein Federelement 7 vorgesehen, das mit einem unteren Kraftangriffspunkt 71 ortsfest (also nicht an einem gemeinsam mit dem Lehnengestell 20 verschwenkbaren Bauteil) festgelegt ist und mit dem anderen, oberen Kraftangriffspunkt 72 an einem Fortsatz 22 des Lehnengestells 20 fixiert ist, der einen zweiten Hebelarm 20b bildet. Über dieses Federelement 7 ist der einen zweiten Hebelarm 20b bildende Fort-satz 22 mit einer definierten Kraft F_{Feder} in Richtung der Gewichtskraft G nach unten verspannt, so daß der durch das Lehnengestell 20 gebildete erste Hebelarm 20a entgegen der Gewichtskraft G beaufschlagt ist.

Gleichzeitig dient das Federelement 7, wie die entsprechenden Federelemente 5, 6 bei den vorhergehenden Ausführungsbeispielen, zur Reduzierung des Spiels in der Einstellvorrichtung für die Lehnenneigung. Unter anderem bewirkt es ein möglichst spielfreies Zusammenwirken des Ritzels 41 mit der Verzahnung 43 des Zahnsegmenthebels 42.

In Figur 7 ist eine Abwandlung des Ausführungsbeispiels aus Figur 6 gezeigt, wobei ein zusätzlicher Zahnsegmenthebel 45 um die Schwenkachse 21 der Rückenlehne frei schwenkbar gelagert ist. Dieser Zahnsegmenthebel 45 weist eine Außenverzahnung 46 auf, die in Geometrie und Ausbildung mit der am Zahnsegment 42 des Lehnengestells vorgesehenen Verzahnung 43 übereinstimmt.

Dabei greift das Federelement 7 mit seinem oberen Kraftangriffspunkt 72 an dem zusätzlichen Zahnsegmenthebel 45 an, wodurch dessen Verzahnung 46 ein entsprechendes Moment (das sich aus der Vorspannkraft des Federelementes 7 und dem Abstand des Kraftangriffspunktes 72 von der Schwenkachse 21 der Rückenlehne ergibt) auf mindestens eine Zahnflanke des Antriebsritzels 41 ausübt. Das entsprechende Verzahnungselement des Antriebsritzels 42 wird hierdurch spielfrei gegen die Verzahnung 43 des an dem Lehnengestell 20 vorgesehenen Zahnsegmenthebels 42 gedrückt. Darüberhinaus unterstützt das durch die Verzahnung 46 des zusätzlichen Zahnsegmenthebels 45 ausgeübte Moment eine Drehbewegung des Zahnritzels 41 in einer Richtung, die eine Verstellung der Rückenlehne entgegen der Gewichtskraft G, entsprechend einer Verstellung des ersten Hebelarmes des Lehnengestelles 20 in Richtung der im wesentlichen senkrechten Position, unterstützt. Die entsprechende Drehrichtung R des Zahnritzels 41 ist durch einen Pfeil in Figur 7 angedeutet. D.h., der zusätzliche Zahnsegmenthebel 45 wirkt auf das Antriebsritzel 41 entgegen der Wirkung der Gewichtskraft G, die an dem ersten Hebelarm 20a des Lehnengestells 20 angreift und über dessen Zahnsegmenthebel 42 auf das Antriebsritzel 41 einwirkt.

## Patentansprüche

1. Kraftfahrzeugsitz, mit
- mindestens einer Einsteilvorrichtung, mit der ein Sitzteil (10, 20) mit und entgegen seiner Gewichtskraft in seiner Lage verstellbar ist, und
- mindestens einem Federelement (5, 6, 7), das unter Vorspannung auf eine die Versteilkraft übertragende kinematische Kette der mindestens einen Einstellvorrichtung einwirkt,
wobei das Federelement (5, 6, 7) derart angeordnet ist, dass es einerseits zur Reduzierung des Spiels in der Einstellvorrichtung dient und andererseits bei einer Verstellung des Sitzteiles (10, 20) entgegen der Gewichtskraft (G) entspannt, so dass Federenergie in die kinematische Kette eingespeist wird, und dass bei einer Verstellung des Sitzteiles (10, 20) in Richtung der Gewichtskraft (G) das Federelement (5, 6, 7) gespannt wird,
**dadurch gekennzeichnet,**
**dass** ein dem zu verstellenden Sitzteil zugeordneter Kraftangriffspunkt (62, 72) des Federelementes (6, 7) an einem zusätzlichen Getriebeelement (35, 45) vorgesehen ist, das außerhalb der kinematischen Kette der Sitzverstellung angeordnet ist und das auf ein Element (31, 41) der kinematischen Kette einwirkt.

2. Kraftfahrzeugsitz nach Anspruch 1, **dadurch gekennzeichnet, dass** das Federelement (5, 6, 7) an einem Kraftfangriffspunkt (52, 62, 72), der dem zu verstellenden Sitzteil (10, 20) zugeordnet ist, eine Kraft mit einer Komponente in Richtung der Gewichtskraft ausübt.

3. Kraftfahrzeugsitz nach Anspruch 2, **dadurch gekennzeichnet, dass** der dem zu verstellenden Sitzteil (10, 20) zugeordnete Kraftangriffspunkt (52, 62) des Federelementes (5; 6) bei einer Verstellung des Sitzteiles (10, 20) entgegen der Gewichtskraft (G) derart verschoben wird, dass sich das Federelement (5; 6) entspannt.

4. Kraftfahrzeugsitz nach Anspruch 3, **dadurch gekennzeichnet, dass** das Federelement (5; 6) zur Reduzierung des Spiels einer Einstellvorrichtung für die Höhe (h) eines Sitzteiles (10) dient, die bei einer Verstellung der Höhe (h) eine gleichzeitige Verlagerung des Sitzteiles (10) in Sitzlängsrichtung (L) bewirkt, und dass das Federelement (5; 6) derart zwischen seinen beiden Kraftangriffspunkten (51, 52; 61, 62) verspannt ist, dass es sich bei einem Anheben des Sitzteiles (10) aufgrund der gleichzeitigen Verlagerung des Sitzteiles in Sitztängsrichtung (L) entspannt.

5. Kraftfahrzeugsitz nach Anspruch 4, **dadurch gekennzeichnet, dass** das Federelement (5; 6) schräg zur Richtung der Gewichtskraft (G) verspannt ist.

6. Kraftfahrzeugsitz nach Anspruch 3, **dadurch gekennzeichnet, dass** das Federelement zur Reduzierung des Spiels einer Einsteilvorrichtung für die Neigung eines Sitzteiles (20) dient, das um eine Achse verschwenkbar gelagert ist, wobei das verstellbare Sitzteil (20) bezüglich der Schwenkachse einen ersten Hebelarm bildet und der dem Sitzteil (20) zugeordnete Kraftangriffspunkt des Federelementes an einem zweiten Hebelarm des Sitzteiles (20) angreift.

7. Kraftfahrzeugsitz nach einem der vorhergehenden Ansprüche, **dadurch gekennzeichnet, dass** das Federelement (5; 6) als Zugfeder ausgebildet ist, deren Kraftangriffspunkte (51, 52; 61, 62) sich bei einer Verstellung des Sitzteiles (10, 20) entgegen der Gewichtskraft (G) einander annähern und bei einer Verstellung des Sitzteiles (10, 20) in Richtung der Gewichtskraft (G) voneinander entfernen.

8. Kraftfahrzeugsitz nach einem der Ansprüche 1 bis 6, **dadurch gekennzeichnet, dass** das Federelement als Druckfeder ausgebildet ist, deren Kraftangriffspunkte sich bei einer Verstellung des Sitzteiles (10, 20) entgegen der Gewichtskraft (G) voneinander entfernen und bei einer Verstellung des Sitzteiles (10, 20) in Richtung der Gewichtskraft (G) einander annähern.

9. Kraftfahrzeugsitz nach einem der vorhergehenden Ansprüche, **dadurch gekennzeichnet, dass** sämtliche Glieder der kinematischen Kette der Einstellvorrichtung zwischen den Kraftangriffspunkten (51, 52; 61, 62) des Federelementes (5, 6, 7) liegen.

10. Kraftfahrzeugsitz nach einem der vorhergehenden Ansprüche, **dadurch gekennzeichnet, dass** mindestens ein Kraftangriffspunkt (51, 61, 71) des Federelementes (5, 6, 7) außerhalb der kinematischen Kette der Einstellvorrichtung angeordnet ist.

11. Kraftfahrzeugsitz nach einem der vorhergehenden Ansprüche, **dadurch gekennzeichnet, dass** ein Kraftangriffspunkt (51, 61, 71) des Federelementes (5, 6, 7) an einem Bauteil vorgesehen ist, das seine räumliche Lage nicht aufgrund einer Betätigung der Einstellvorrichtung verändert.

12. Kraftfahrzeugsitz nach Anspruch 11, **dadurch gekennzeichnet, dass** der Kraftangriffspunkt (51, 61, 71) an der Oberschiene einer Schienenlängsführung oder einem mit der Oberschiene fest verbundenen Teil angeordnet ist.

13. Kraftfahrzeugsitz nach einem der Ansprüche 1 bis 10, **dadurch gekennzeichnet, dass** ein Kraftangriffspunkt (52, 62, 72) des Federelementes (5, 6, 7) an einem Teil vorgesehen ist, das bei Betätigung der Einstellvorrichtung gleichzeitig seine Lage verändert.

14. Kraftfahrzeugsitz nach Anspruch 13, **dadurch gekennzeichnet, dass** der Kraftangriffspunkt (52, 62, 72) des Federelementes (7) an einem Glied der kinematischen Kette vorgesehen ist.

15. Kraftfahrzeugsitz nach Anspruch 14, **dadurch gekennzeichnet, dass** der Kraftangriffspunkt (52, 62, 72) an einem Hebelarm (13) oder einem Getriebeelement (42) der kinematischen Kette angeordnet ist.

16. Kraftfahrzeugsitz nach einem der vorangegangenen Ansprüche **dadurch gekennzeichnet, dass** das zusätzliche Getriebeelement (35, 45) auf ein Getriebeelement (31, 41) der kinematischen Kette einwirkt.

17. Kraftfahrzeugsitz nach Anspruch 16, **dadurch gekennzeichnet, dass** das zusätzliche Getriebeelement (35, 45) unter der Vorspannkraft des Federelementes (6, 7) auf das Getriebeelement (31, 41) der kinematischen Kette derart einwirkt, dass eine Bewegung des Getriebeelementes (31, 41), die zu einer Verstellung des Sitzteiles (10, 20) entgegen der Gewichtskraft (G) führt, unterstützt wird.

18. Kraftfahrzeugsitz nach einem der vorhergehenden Ansprüche, **dadurch gekennzeichnet, dass** die Einstellvorrichtung ein zusätzliches Getriebeelement (35, 45) aufweist, an dem das Federelement (6, 7) angreift und das mit einem Antriebselement (31, 41) derart in Wirkverbindung steht, dass die Federkraft einer durch die Gewichtskraft (G) verursachten Abtriebskraft entgegenwirkt.

19. Kraftfahrzeugsitz nach einem der Ansprüche 16 bis 18, **dadurch gekennzeichnet, dass** das zusätzliche Getriebeelement (35, 45) unter der Vorspannkraft des Federelementes (6, 7) auf das Getriebeelement (31, 41) der kinematischen Kette derart einwirkt, dass das Getriebeelement (31) unter Herausnahme von Spiel gegen ein anderes Getriebeelement (32) der kinematischen Kette verspannt wird.

20. Kraftfahrzeugsitz nach einem der Ansprüche 16 bis 19, **dadurch gekennzeichnet, dass** die Einstellvorrichtung ein Antriebsritzel (31, 41) aufweist, dessen Verzahnung in eine Gegenverzahnung (33, 43) eines in der kinematischen Kette angeordneten Getriebeelementes (32, 42) eingreift, und dass die Verzahnung (36, 46) des zusätzlichen Getriebeelementes (35, 45) übereinstimmend mit der Verzahnung (33, 43) des in der kinematischen Kette angeordneten Getriebeelementes (32, 42) ausgebildet ist und dass das zusätzliche Getriebeelement (35, 45) vorzugsweise entgegen der Wirkung der Gewichtskraft (G) auf das Antriebsritzel (31, 41) einwirkt.

21. Kraftfahrzeugsitz nach einem der Ansprüche 16 bis 20, **dadurch gekennzeichnet, dass** ein in der kinematischen Kette angeordnetes Getriebeelement (32, 42) und das zusätzliche Getriebeelement (35, 45) als schwenkbar gelagerte Zahnsegmenthebel ausgebildet sind, wobei das zusätzliche Getriebeelement (35, 45) auf der Achse des in der kinematischen Kette angeordneten Getriebeelementes (32, 42) frei schwenkbar lagert.

22. Kraftfahrzeugsitz nach einem der Anspruch 21, **dadurch gekennzeichnet, dass** der Kraftangriffspunkt (62, 72) des Federelementes (6, 7) am zusätzlichen Getriebeelement (35, 45) bezüglich der Schwenkachse (21) des in der kinematischen Kette angeordneten Getriebeelementes (32, 42) auf der dem Antriebsritzel (31, 41) abgewandten Seite liegt.

## Claims

1. Motor vehicle seat with
- at least one adjusting device with which a seat part (10, 20) can be adjusted in position with and opposite the loading direction, and
- at least one spring element (5, 6, 7) which acts under pretension on a kinematic chain of the at least one adjusting device transferring the adjusting force,
wherein the spring element (5, 6, 7) is arranged so that it serves on the one hand for reducing the play in the adjusting device and on the other hand during adjustment of the seat part (10, 20) opposite the loading direction (G) it relaxes so that spring energy is fed into the kinematic chain, and that during adjustment of the seat part (10, 20) in the direction of the weight (G) the spring element (5, 6, 7) is tensioned,
**characterised in that**
a force engagement point (62, 72) of the spring element (6, 7) associated with the seat part to be adjusted is provided on an additional gearing element (35, 45) which is arranged outside of the kinematic chain of the seat adjustment and which acts on an element (31, 41) of the kinematic chain.

2. Motor vehicle seat according to claim 1, **characterised in that** the spring element (5, 6, 7) at a force engagement point (52, 62, 72) associated with the seat part (10, 20) which is to be adjusted exerts a force with a component in the loading direction.

3. Motor vehicle seat according to claim 2, **characterised in that** the force engagement point (52; 62) of the spring element (5; 6) which is associated with the seat part (10, 20) to be adjusted is moved during adjustment of the seat part (10, 20) opposite the loading direction (G) so that the spring element (5; 6) relaxes.

4. Motor vehicle seat according to claim 3, **characterised in that** the spring element (5; 6) serves for reducing the play of an adjusting device for the height (h) of a seat part (10) which during adjustment of the height (h) causes a simultaneous displacement of the seat part (10) in the seat longitudinal direction (L) and that the spring element (5; 6) is tensioned between its two force engagement points (51, 52; 61, 62) so that it relaxes when the seat part (10) is raised as a result of the simultaneous displacement of the seat part in the seat longitudinal direction (L).

5. Motor vehicle seat according to claim 4, **characterised in that** the spring element (5; 6) is tensioned inclined towards the loading direction (G).

6. Motor vehicle seat according to claim 3, **characterised in that** the spring element serves for reducing the play of an adjusting device for the incline of a seat part (20) which is mounted to swivel about an axis (21) whereby the adjustable seat part (20) forms in relation to the swivel axis (21) a first lever arm and the force engagement point of the spring element associated with the seat part (20) engages on a second lever arm of the seat part (20).

7. Motor vehicle seat according to one of the preceding claims, **characterised in that** the spring element (5; 6) is formed as a tension spring whose force engagement points (51, 52; 61, 62) approach each another when adjusting the seat part (10, 20) opposite the loading direction (G) and move further away from each other during adjustment of the seat part (10, 20) in the loading direction (G).

8. Motor vehicle seat according to one of the claims 1 to 6, **characterised in that** the spring element is formed as a compression spring whose force engagement points move further away from each other during adjustment of the seat part (10, 20) opposite the loading direction (G) and approach each other when adjusting the seat part (10, 20) in the loading direction (G).

9. Motor vehicle seat according to one of the preceding claims, **characterised in that** all links of the kinematic chain of the adjusting device lie between the force engagement points (51, 52; 61, 62) of the spring element (5, 6, 7).

10. Motor vehicle seat according to one of the preceding claims, **characterised in that** at least one force engagement point (51, 61, 71) of the spring element (5, 6, 7) is mounted outside of the kinematic chain of the adjusting device.

11. Motor vehicle seat according to one of the preceding claims, **characterised in that** one force engagement point (51, 61, 71) of the spring element (5, 6, 7) is provided on a component part which does not change its spatial position as a result of actuation of the adjusting device.

12. Motor vehicle seat according to claim 11, **characterised in that** the force engagement point (51, 61, 71) is mounted on the top rail of a rail longitudinal guide or a part fixedly connected to the top rail.

13. Motor vehicle seat according to one of the claims 1 to 10, **characterised in that** a force engagement point (52, 62, 72) of the spring element (5, 6, 7) is provided on a part which changes its position at the same time as the adjusting device is actuated.

14. Motor vehicle seat according to claim 13, **characterised in that** the force engagement point (52, 62, 72) of the spring element (7) is provided on a link of the kinematic chain.

15. Motor vehicle seat according to claim 14, **characterised in that** the force engagement point (52, 62, 72) is arranged on a lever arm (13) or a gearing element (42) of the kinematic chain.

16. Motor vehicle seat according to one of the preceding claims, **characterised in that** the additional gearing element (35, 45) acts on a gearing element (31, 41) of the kinematic chain.

17. Motor vehicle seat according to claim 16, **characterised in that** the additional gearing element (35, 45) acts under the pretensioning force of the spring element (6, 7) on the gearing element (31, 41) of the kinematic chain so that the movement of the gearing element (31, 41) which leads to a displacement of the seat part (10, 20) opposite the loading direction (G) is assisted.

18. Motor vehicle seat according to one of the preceding claims, **characterised in that** the adjusting device has an additional gearing element (35, 45) on which the spring element (6, 7) engages and which is in active connection with a drive element (31, 41) so that the spring force counters an output force caused by the weight (G).

19. Motor vehicle seat according to one of the claims 16 to 18, **characterised in that** the additional gearing element (35, 45) acts under the pretensioning force of the spring element (6, 7) on the gearing element (31, 41) of the kinematic chain so that the gearing element (31) is tensioned by removing play against another gearing element (32) of the kinematic chain

20. Motor vehicle seat according to one of the claims 16 to 19, **characterised in that** the adjusting device has a drive pinion (31, 41) whose teeth engage in counter teeth (33, 43) of a gearing element (32, 42) mounted in the kinematic chain, and that the teeth (36, 46) of the additional gearing element (35, 45) are designed to agree with the teeth (33, 43) of the gearing element (32, 42) arranged in the kinematic chain and that the additional gearing element (35, 45) preferably acts on the drive pinion (31, 41) against the weight action (G).

21. Motor vehicle seat according to one of the claims 16 to 20, **characterised in that** a gearing element (32, 42) mounted in the kinematic chain and the additional gearing element (35, 45) are designed as pivotably mounted tooth segment levers, wherein the additional gearing element (35, 45) is mounted so as to pivot freely on the axis of the gearing element (32, 42) mounted in the kinematic chain.

22. Motor vehicle seat according to claim 21, **characterised in that** the force engagement point (62, 72) of the spring element (6, 7) on the additional gearing element (35, 45) lies, in relation to the swivel axis (21) of the gearing element (32, 42) mounted in the kinematic chain, on the side facing away from the drive pinion (31, 41).

## Revendications

1. Siège de véhicule automobile, comprenant :
- au moins un dispositif de réglage au moyen duquel une partie du siège (10, 20) est réglable quant à sa position aussi bien avec l'aide qu'à l'encontre de la force due à son poids, et
- au moins un élément élastique (5, 6, 7) qui agit sous précontrainte sur une chaîne cinématique, qui transmet la force de réglage, dudit au moins un dispositif de réglage,
dans lequel l'élément élastique (5, 6, 7) est ainsi agencé qu'il sert d'une part à réduire le jeu dans le dispositif de réglage et qu'il se détend d'autre part lors d'un réglage de la partie de siège (10, 20) à l'encontre de la force due au poids (G), de sorte que l'énergie élastique est appliquée dans la chaîne cinématique, et que l'élément élastique (5, 6, 7) se tend lors d'un réglage de la partie de siège (10, 20) dans la direction de la force due au poids (G),
**caractérisé en ce qu'**un point d'application (62, 72) de l'élément élastique (6, 7) associé à la partie de siège à régler est prévu sur un élément de transmission (35, 45) additionnel qui est agencé en dehors de la chaîne cinématique du réglage de siège et agit sur un élément (31, 41) de la chaîne cinématique.

2. Siège de véhicule automobile selon la revendication 1, **caractérisé en ce que** l'élément élastique (5, 6, 7) exerce, en un point d'application (52, 62, 72) associé à la partie de siège (10, 20) à régler, une force avec une composante en direction de la force due au poids (G).

3. Siège de véhicule automobile selon la revendication 2, **caractérisé en ce que** le point d'application (52 ; 62) de l'élément élastique (5 ; 6) associé à la partie de siège (10, 20) à régler est déplacé, lors d'un réglage de la partie de siège (10, 20) à l'encontre de la force due au poids (G) de telle sorte que l'élément élastique (5 ; 6) se détend.

4. Siège de véhicule automobile selon la revendication 3, **caractérisé en ce que** l'élément élastique (5 ; 6) sert à réduire le jeu d'un dispositif de réglage pour la hauteur (h) d'une partie de siège (10), qui provoque, lors d'un réglage de la hauteur (h), un déplacement simultané de la partie de siège (10) dans la direction longitudinale (L) du siège, et **en ce que** l'élément élastique (5 ; 6) est tendu entre ses deux points d'application (51, 52 ; 61, 62) de telle manière qu'il se détend lors d'un soulèvement de la partie de siège (10) en raison du déplacement simultané de la partie de siège dans la direction longitudinale (L) du siège.

5. Siège de véhicule automobile selon la revendication 4, **caractérisé en ce que** l'élément élastique (5 ; 6) est tendu en oblique par rapport à la direction de la force due au poids (G).

6. Siège de véhicule automobile selon la revendication 3, **caractérisé en ce que** l'élément élastique sert à réduire le jeu d'un dispositif de réglage pour l'inclinaison d'une partie du siège (20) qui est monté en pivotement autour d'un axe, la partie de siège réglable (20) formant un premier bras de levier par rapport à l'axe de pivotement, et le point d'application de l'élément élastique associé à la partie de siège (20) s'applique sur un deuxième bras de levier de la partie de siège (20).

7. Siège de véhicule automobile selon l'une des revendications précédentes, **caractérisé en ce que** l'élément élastique (5 ; 6) est réalisé sous forme de ressort de traction, dont les points d'application (51, 52 ; 61, 62) se rapprochent l'un de l'autre lors d'un déplacement de la partie de siège (10, 20) à l'encontre de la force due au poids (G), et s'éloignent l'un de l'autre lors d'un déplacement de la partie de siège (10, 20) en direction de la force due au poids (G).

8. Siège de véhicule automobile selon l'une des revendications 1 à 6, **caractérisé en ce que** l'élément élastique est réalisé sous forme de ressort de compression, dont les points d'application s'éloignent l'un de l'autre lors d'un déplacement de la partie de siège (10, 20) à l'encontre de la force due au poids (G), et se rapprochent l'un de l'autre lors d'un déplacement de la partie de siège (10, 20) en direction de la force due au poids (G).

9. Siège de véhicule automobile selon l'une des revendications précédentes, **caractérisé en ce que** la totalité des maillons de la chaîne cinématique du dispositif de réglage sont situés entre les points d'application (51, 52 ; 61, 62) de l'élément élastique (5, 6, 7).

10. Siège de véhicule automobile selon l'une des revendications précédentes, **caractérisé en ce qu'**au moins un point d'application (51, 61, 71) de l'élément élastique (5, 6, 7) est agencé à l'extérieur de la chaîne cinématique du dispositif de réglage.

11. Siège de véhicule automobile selon l'une des revendications précédentes, **caractérisé en ce qu'**un point d'application (51, 61, 71) de l'élément élastique (5, 6, 7) est prévu sur un composant qui ne modifie pas sa position dans l'espace en raison d'un actionnement du dispositif de réglage.

12. Siège de véhicule automobile selon la revendication 11, **caractérisé en ce que** le point d'application (51, 61, 71) est agencé sur le rail supérieur d'un guidage longitudinal à rails, ou sur une partie fixement reliée au rail supérieur.

13. Siège de véhicule automobile selon l'une des revendications 1 à 10, **caractérisé en ce qu'**un point d'application (52, 62, 72) de l'élément élastique (5, 6, 7) est prévu sur une pièce qui modifie simultanément sa position lors de l'actionnement du dispositif de réglage.

14. Siège de véhicule automobile selon la revendication 13, **caractérisé en ce que** le point d'application (52, 62, 72) de l'élément élastique (7) est prévu sur un maillon de la chaîne cinématique.

15. Siège de véhicule automobile selon la revendication 14, **caractérisé en ce que** le point d'application (52, 62, 72) est agencé sur un bras de levier (13) ou sur un élément de transmission (42) de la chaîne cinématique.

16. Siège de véhicule automobile selon l'une des revendications précédentes, **caractérisé en ce que** l'élément de transmission additionnel (35, 45) agit sur un élément de transmission (31, 41) de la chaîne cinématique.

17. Siège de véhicule automobile selon la revendication 16, **caractérisé en ce que** l'élément de transmission additionnel (35, 45) agit, sous la force de précontrainte de l'élément élastique (6, 7), sur l'élément de transmission (31, 41) de la chaîne cinématique de telle manière qu'il assiste un déplacement de l'élément de transmission (31, 41) qui mène à un déplacement de la partie de siège (10, 20) à l'encontre de la force due au poids (G).

18. Siège de véhicule automobile selon l'une des revendications précédentes, **caractérisé en ce que** le dispositif de réglage comprend un élément de transmission additionnel (35, 45) sur lequel s'applique l'élément élastique (6, 7), et qui coopère avec un élément d'entraînement (31, 41) de telle façon que la force élastique agit à l'encontre d'une force contraire provoquée par la force due au poids (G).

19. Siège de véhicule automobile selon l'une des revendications 16 à 18, **caractérisé en ce que** l'élément de transmission additionnel (35, 45) agit, sous la force de précontrainte de l'élément élastique (6, 7), sur l'élément de transmission (31, 41) de la chaîne cinématique de telle manière que l'élément de transmission (31) est serré contre un autre élément de transmission (32) de la chaîne cinématique, avec annulation du jeu.

20. Siège de véhicule automobile selon l'une des revendications 16 à 19, **caractérisé en ce que** le dispositif de réglage comprend un pignon d'entraînement (31, 41), dont la denture s'engage dans une denture complémentaire (33, 43) d'un élément de transmission (32, 42) agencé dans la chaîne cinématique, et **en ce que** la denture (36, 46) de l'élément de transmission additionnel (35, 45) est réalisée de façon identique à la denture (33, 43) de l'élément de transmission (32, 42) agencé dans la chaîne cinématique, et **en ce que** l'élément de transmission additionnel (35, 45) agit sur le pignon d'entraînement (31, 41) de préférence à l'encontre de l'action de la force due au poids (G).

21. Siège de véhicule automobile selon l'une des revendications 16 à 20, **caractérisé en ce qu'**un élément de transmission (32, 42) agencé dans la chaîne cinématique et l'élément de transmission additionnel (35, 45) sont réalisés sous forme de leviers à secteur denté montés en rotation, l'élément de transmission additionnel (35, 45) étant monté en rotation libre sur l'axe de l'élément de transmission (32, 42) agencé dans la chaîne cinématique.

22. Siège de véhicule automobile selon la revendication 21, **caractérisé en ce que** le point d'application (62, 72) de l'élément élastique (6, 7) sur l'élément de transmission additionnel (35, 45) est situé sur le côté détourné du pignon d'entraînement (31, 41), par rapport à l'axe de pivotement (21) de l'élément de transmission (32, 42) agencé dans la chaîne cinématique.
